# FASCICULE DE BREVET EUROPEEN

(11) **EP 2 130 613 B1**
(45) Date de publication et mention de la délivrance du brevet: **23.11.2011**
(21) Numéro de dépôt: 09161334.9
(22) Date de dépôt: 28.05.2009
(51) Int. Cl.: B08B 1/04

(54) **Dispositif motorisé de nettoyage d'au moins un creuset d'une installation de brasage**
Motorisierte Reinigungsvorrichtung mindestens eines Tiegels einer Lötanlage
Motorised device for cleaning at least one crucible of a brazing installation

(30) Priorité: 02.06.2008 FR 0803289
(43) Date de publication de la demande: 09.12.2009
(73) Titulaire: Robert Bosch GmbH, 70442 Stuttgart (DE)
(72) Inventeur: Abouassam, Aïcha, 14000 Caen (FR); Faudemer, Daniel, 14260 Aunay sur Audon (FR); Leplanois, Claude, 14840 Cuverville (FR)
(74) Mandataire: Hurwic, Aleksander Wiktor

(56) Documents cités:
- EP-A- 0 810 039
- DE-U1- 9 420 710
- JP-A- 2 271 590
- US-A- 3 900 911
- US-A1- 2003 217 429
- US-A1- 2007 017 088

## Description

L'invention se rapporte à un dispositif de nettoyage d'au moins un creuset d'une installation de brasage.

L'invention se rapporte plus particulièrement à un dispositif de nettoyage d'au moins un creuset appartenant à une installation de brasage de composants électroniques sur une carte à circuit imprimé, le creuset comportant une face supérieure horizontale concave qui est destinée à contenir un métal d'apport en fusion susceptible de former une couche superficielle de composé intermétallique sur la surface du creuset, ledit dispositif de nettoyage comportant au moins une première brosse métallique pour éliminer la couche superficielle de composé intermétallique lors d'une opération de brossage du creuset.

On connaît déjà des creusets de ce type. Ce type de creuset est notamment utilisé dans des installations automatiques de brasage en grande série de pattes de composants électroniques sur des cartes à circuit imprimé

Des dispositifs de nettoyage ou de brossage de circuits imprimés sont également connus comme par example celui décrit dans le document US 2007 /17088.

Le brasage des composants électroniques sur des cartes à circuit imprimé est réalisé avec un métal d'apport en fusion qui est chauffé à une température de brasage inférieure à 450°C, par exemple entre 310°C et 325°C. Ce type de brasage est aussi appelé "brasage tendre" ou "soldering" en langue anglaise.

Il est connu de réaliser un tel creuset en acier. Le métal d'apport en fusion est généralement constitué d'un alliage comportant de l'étain (Sn). Le métal d'apport en fusion est contenu dans le creuset directement au contact de sa surface supérieure en acier.

L'état de surface de la face supérieure concave du creuset doit présenter une mouillabilité adaptée aux opérations de brasage. La face supérieure concave doit notamment présenter une très faible rugosité.

Si la mouillabilité de la face supérieure concave du creuset est insuffisante, la brasure obtenue à la fin de l'opération de brasage risque d'être défectueuse.

Or, on a constaté qu'à la température de brasage, l'étain (Sn) entrant dans la composition de l'alliage métallique d'apport réagit avec le fer de l'acier. Il se forme alors une couche superficielle rugueuse de composé intermétallique d'étain (Sn) et de fer (FeₓSn_{y}) qui recouvre la surface du creuset. L'épaisseur de cette couche croît très rapidement. Lorsque cette couche rugueuse est trop épaisse, la mouillabilité du creuset est dégradée, ce qui affecte la qualité des brasures réalisées ultérieurement.

Pour résoudre ce problème, il est connu d'interrompre l'opération de brasage pour effectuer le nettoyage régulier des creusets afin de maintenir la qualité de la brasure à un niveau acceptable.

Le procédé de nettoyage consiste à utiliser une brosse métallique manuelle et un produit nettoyant à base d'alcool. Un opérateur utilise la brosse pour nettoyer chaque creuset afin d'éliminer la couche de composé intermétallique. L'opération de nettoyage est répétée individuellement pour chaque creuset.

Cependant, le nettoyage manuel n'est toutefois pas uniforme et dépend beaucoup de la personne qui le réalise. En effet, la personne est susceptible d'oublier de nettoyer un creuset. Les creusets ne sont pas non plus nettoyés de manière homogène.

De plus, l'opérateur chargé de nettoyer le creuset est exposé à des poussières du composé intermétallique résultant du brossage.

En outre, l'opérateur est aussi exposé à des risques de projection ou à des émanations du produit de nettoyage. Or, ce produit de nettoyage présente un danger potentiel pour la santé de l'opérateur.

Un tel procédé de nettoyage manuel est par ailleurs lent et onéreux.

Pour résoudre notamment ces problèmes, l'invention propose un dispositif de nettoyage du type décrit précédemment, caractérisé en ce que la première brosse est une brosse cylindrique qui est monté à rotation autour d'un axe transversal dans un châssis, et en ce que la première brosse est entraînée en rotation par un moteur de manière à automatiser l'opération de brossage.

Selon d'autres caractéristiques de l'invention :
- le châssis comporte un capot supérieur qui est susceptible de protéger un opérateur de projections de poussière lors de l'opération de brossage ;
- le dispositif de nettoyage comporte un aspirateur qui est agencé à proximité de la première brosse de manière à aspirer les poussières susceptibles d'être produites par l'opération de brossage ;
- le châssis est porté par un chariot mobile selon une direction longitudinale pour permettre le passage d'arrière vers l'avant de la première brosse au-dessus de la face concave du creuset ;
- le dispositif de nettoyage comporte des moyens pour appliquer automatiquement un produit de nettoyage sur la face concave du creuset avant le passage de la première brosse ;
- le dispositif de nettoyage comporte une éponge transversale qui est agencée longitudinalement en avant de la première brosse et qui est destinée à être imprégnée du produit de nettoyage ;
- le dispositif de nettoyage comporte une deuxième brosse arrière métallique cylindrique qui est montée à rotation parallèlement à la première brosse avant et qui est entraînée en rotation par un moteur ;
- la deuxième brosse tourne dans un sens inverse au sens de rotation de la première brosse ;
- la première brosse et la deuxième brosse sont entraînées en rotation par un moteur commun ;
- l'installation de brasage comporte une pluralité de creusets qui sont agencés sensiblement dans un même plan horizontal, la première brosse étant d'une largeur adaptée au nettoyage de tous les creusets en une seule passe.

D'autres caractéristiques et avantages de l'invention apparaîtront au cours de la lecture de la description détaillée qui va suivre pour la compréhension de laquelle on se reportera aux dessins annexés parmi lesquels :
- la figure 1 est une vue schématique en coupe verticale qui représente une installation automatique de brasage en grande série de composants électroniques sur des cartes à circuit imprimé entre deux opérations de brasage ;
- la figure 2 est une vue en coupe verticale qui représente un creuset de l'installation de brasage ;
- la figure 3 est une vue en perspective éclatée qui représente un dispositif motorisé de nettoyage des creusets de l'installation de brasage qui est réalisé selon les enseignements de l'invention ;
- la figure 4 est une vue de côté qui représente le dispositif de nettoyage de la figure 3 ,
- la figure 5 est une vue arrière qui représente le dispositif de nettoyage de la figure 3 ;
- la figure 6 est une vue de côté qui représente le dispositif de nettoyage de la figure 3 lors d'une première étape d'application d'un produit nettoyant sur un creuset ;
- la figure 7 est une vue similaire à celle de la figure 6 qui représente le dispositif de nettoyage lors d'une deuxième étape de brossage du creuset.

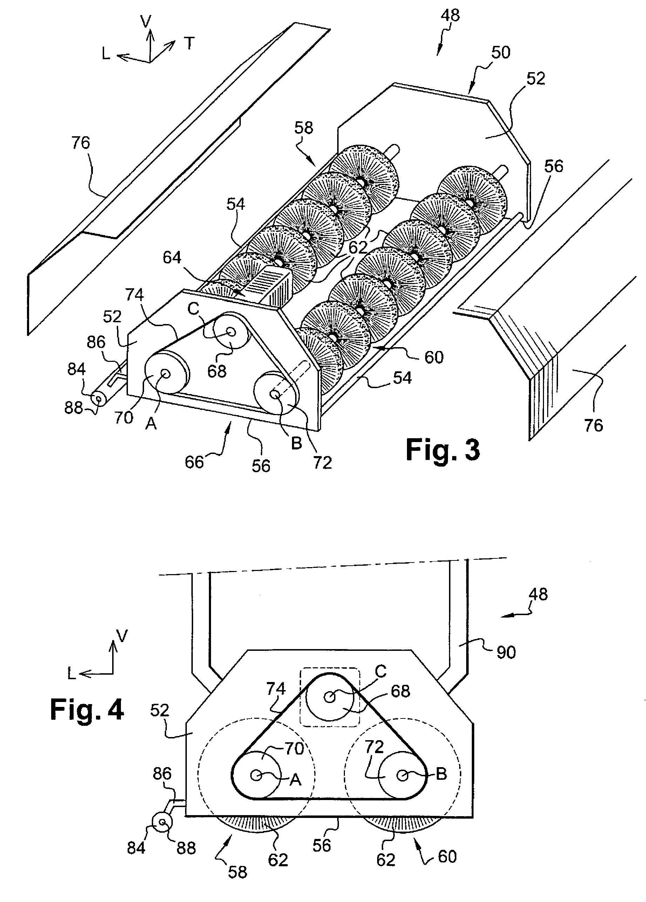

Pour la suite de la description, on adoptera de manière non limitative des orientations longitudinale, verticale et transversale, indiquées par le trièdre "L,V,T" de la figure 3. La direction longitudinale est dirigée d'arrière en avant.

Pour la suite de la description, des éléments identiques, analogues ou similaires seront désignés par des mêmes numéros de référence.

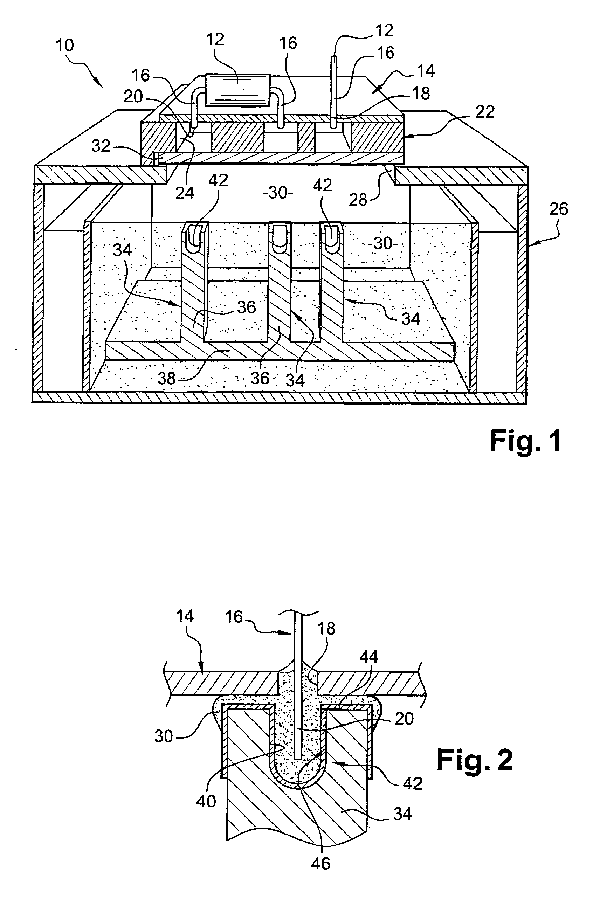

On a représenté à la figure 1 une installation 10 automatique de brasage en grande série de composants électroniques 12 sur des cartes horizontales à circuit imprimé 14, dont une seule est représentée.

Chaque composant électronique 12 comporte au moins une patte 16 verticale métallique de fixation sur la carte à circuit imprimé 14. La patte 16 métallique de fixation est aussi destinée à former aussi un contact électrique avec le circuit imprimé.

Chaque patte 16 est introduite dans un orifice 18 traversant de fixation correspondant réalisé dans la carte à circuit imprimé 14. Ainsi, lorsque les composants électroniques 12 sont positionnés sur la carte à circuit imprimé 14, un tronçon d'extrémité inférieure libre 20 des pattes 16 dépasse sous la carte à circuit imprimé 14.

Comme représenté à la figure 1, la carte à circuit imprimé 14 sur laquelle les composants électroniques 12 sont positionnés est posée sur un support 22 supérieur horizontal de l'installation 10 de brasage comportant des lumières 24 qui sont agencées en coïncidence avec les pattes 16 de fixation.

L'installation 10 de brasage comporte aussi un bac 26 inférieur qui comporte une ouverture 28 supérieure qui est agencée au-dessous et au droit du support 22. Le bac 26 contient un bain de métal d'apport 30 en fusion.

Le métal d'apport 30 est plus particulièrement constitué d'un alliage métallique sensiblement eutectique d'étain (Sn) et de plomb (Pb), comportant par exemple 63% d'étain (Sn) et 37% de plomb (Pb) en masse.

Le métal d'apport 30 peut aussi être constitué par un alliage de cuivre (Cu), d'argent (Ag) et d'étain (Sn).

Le bac 26 comporte des moyens de chauffage (non représentés) du bain de métal d'apport 30 à une température de brasage qui est supérieure à la température de fusion du métal d'apport 30, qui est ici de 183°C. La température de brasage est par exemple comprise entre 300°C et 350°C. De préférence, la température de brasage est comprise entre 310°C et 325°C.

L'ouverture 28 du bac 26 est susceptible d'être fermée par un plateau 32 horizontal coulissant transversalement entre une position ouverte dans laquelle l'ouverture 28 débouche directement sous le support 22 et une position fermée dans laquelle le bac 26 est clos. Le bac 26 est clos entre deux opérations de brasage de manière à empêcher l'oxydation du métal d'apport 30 à la surface du bain. A cet effet, lorsque le bac 26 est clos, la surface du bain de métal d'apport 30 est généralement exposée à un gaz non réactif tel que de l'azote.

Une pluralité de colonnes 34 verticales sont agencées dans le bac 26. La base 36 de chaque colonne 34 est fixée sur une plaque 38 horizontale inférieure commune. Chaque colonne 34 comporte une face d'extrémité supérieure concave 40 qui forme la face intérieure d'un creuset 42. Chaque creuset 42 est agencé en correspondance avec une lumière 24 associée du support 22.

Pour la suite de la description, on ne décrira qu'un seul creuset 42. Sa description sera applicable aux autres creusets 42.

Le creuset 42 est délimité radialement par un bord périphérique 44 supérieur. Le bord périphérique 44 comporte au moins un créneau (non représenté) pour l'évacuation du surplus de métal d'apport 30 en fusion lors de l'opération de brasage.

La plaque 38 forme un ascenseur qui est monté mobile verticalement dans le bac 26. Les creusets 42 sont ainsi montés mobiles entre une position basse d'immersion dans laquelle les creusets 42 sont entièrement immergés dans le bain de métal d'apport 30 en fusion, et une position haute de brasage dans laquelle les creusets 42 sont introduits dans les lumières 24 du support 22 de manière que le tronçon d'extrémité libre 20 de chaque patte 16 soit plongé dans le creuset 42 associé, comme représenté à la figure 2.

Ainsi, lorsque les creusets 42 remontent vers leur position supérieure de brasage, ils sont remplis à ras bord de métal d'apport 30 en fusion.

On a constaté à l'usage que le fer entrant dans la composition de l'acier réagit avec au moins l'un des composés métalliques entrant dans la composition du métal d'apport 30, à la température de brasage formant ainsi une couche superficielle 46 de composé intermétallique sur la surface du creuset 42, et notamment sur la face supérieure concave 40, sur le bord 44 ainsi que sur une portion supérieure des parois latérales verticales, comme représenté à la figure 2.

L'invention propose donc un dispositif 48 motorisé de nettoyage des creusets 42 pour éliminer automatiquement la couche superficielle 46 de composé intermétallique.

On a représenté à la figure 3 un dispositif 48 de nettoyage réalisé selon les enseignements de l'invention.

Le dispositif 48 de nettoyage comporte un châssis 50 qui est formé par deux flasques 52 latéraux parallèles qui s'étendent dans des plans vertical longitudinal. Les flasques 52 sont fixés l'un à l'autre par l'intermédiaire de traverses 54 d'orientation transversale.

Chaque flasque 52 est délimité vers le bas par un bord inférieur 56 longitudinal qui s'étend parallèlement et à la même hauteur que le bord inférieur 56 de l'autre flasque 52.

Le dispositif 48 de nettoyage comporte aussi une première brosse 58 et une deuxième brosse 60 métalliques cylindriques de mêmes dimensions. Chaque brosse 58, 60 métallique comporte un axe central "A, B" transversal associé. Des filaments métalliques 62 sont fixés radialement sur l'axe central "A, B" en formant une hélice qui est inscrite dans un cylindre coaxial à l'axe central "A, B" associé.

Chaque brosse métallique 58, 60 est monté à rotation entre les deux flasques 52 du châssis 50 autour de leur axe central "A, B". La deuxième brosse 60 est montée longitudinalement derrière la première brosse 58 et à la même hauteur.

Plus précisément, et comme représenté à la figure 4, chaque brosse 58, 60 est agencée de manière qu'une extrémité inférieure libre des filaments 62 inférieurs dépasse verticalement vers le bas par rapport au bord inférieur 56 des flasques 52.

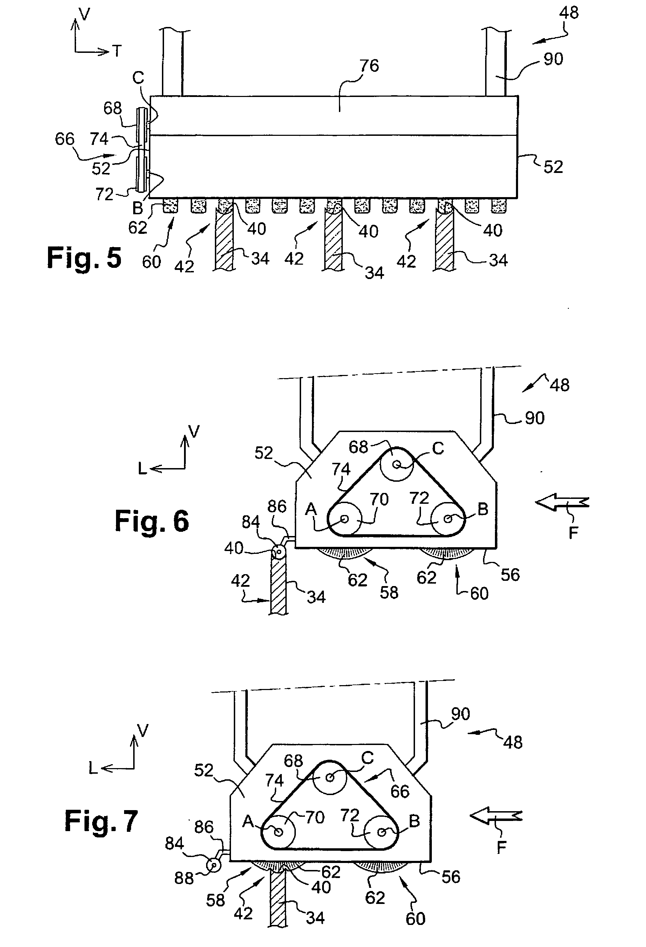

De plus, comme représenté à la figure 5, les brosses 58, 60 sont avantageusement suffisamment larges selon la direction transversale pour nettoyer plusieurs creusets 42 en un seul passage lorsque l'installation 10 de brasage comporte une pluralité de creusets 42 qui sont agencés sensiblement dans un même plan horizontal.

Le dispositif 48 de nettoyage comporte aussi un moteur 64 électrique commun qui est destiné à entraîner simultanément en rotation la première brosse 58 et la deuxième brosse 60 autour de leur axe central "A, B"de manière à automatiser l'opération de brossage.

A cet effet, le dispositif 48 de nettoyage comporte des moyens de transmission 66 du mouvement de rotation de l'axe moteur "C" du moteur 64 aux axes centraux "A, B" des brosses 58, 60.

Le moteur 64 est plus particulièrement agencé entre les deux flasques 52, au-dessus des brosses 58, 60. Une face d'extrémité transversale gauche du moteur 64 est fixée contre une face intérieure du flasque 52 gauche. Le moteur 64 comporte un axe moteur "C" qui s'étend transversalement à travers le flasque 52 gauche. L'extrémité libre de l'axe moteur "C" qui fait saillie à l'extérieur du flasque 52 porte une poulie motrice 68 solidaire en rotation.

Chaque axe central "A, B" des brosses 58, 60 traverse aussi le flasque 52 gauche, et chaque extrémité libre porte une poulie menée 70, 72 qui s'étend dans un même plan longitudinal vertical que la poulie motrice 68.

Une courroie 74 souple de transmission est agencée dans un plan longitudinal vertical autour des trois poulies 68, 70, 72 de manière à transmettre le mouvement de rotation de l'axe moteur "C" aux brosses 58, 60. Dans cette configuration, les deux brosses 58, 60 tournent dans le même sens que l'axe moteur "C".

Selon une variante non représentée de l'invention, les moyens de transmission comportent des moyens pour inverser le mouvement de rotation d'une des deux brosses 58, 60. Par exemple, la première brosse 58 est entraînée en rotation par l'intermédiaire d'une courroie de transmission, comme décrit précédemment, et le deuxième brosse 60 est entraînée en rotation par la première brosse 58 par l'intermédiaire d'un jeu d'engrenages.

Comme représenté à la figure 3, le châssis 50 comporte aussi un capot 76 qui est réalisé en deux parties dont chacune recouvre une brosse 58, 60 associée pour protéger l'environnement ambiant, par exemple le personnel ou les machines, de projections. Chaque partie de capot 76 s'étend globalement de manière à recouvrir la partie supérieure et la partie avant ou arrière du châssis 50.

En variante, le dispositif de nettoyage comporte un aspirateur de manière à aspirer les poussières de couche superficielle susceptibles d'être produites par l'opération de brossage. A cet effet, le capot comporte une fenêtre d'aspiration qui est agencé longitudinalement entre la première brosse et la deuxième brosse. Un orifice d'un tuyau flexible supérieur d'aspiration est raccordé de manière étanche à la fenêtre d'aspiration de façon à aspirer les poussières présentes sous le capot.

Par ailleurs, comme représenté à la figure 4, le dispositif 48 de nettoyage comporte des moyens pour appliquer automatiquement un produit de nettoyage sur les creusets 42 avant le passage de la première brosse 58. Le produit de nettoyage est par exemple un liquide réalisé à base d'alcool. A cet effet, le dispositif 48 de nettoyage comporte une éponge 84 transversale qui est agencée longitudinalement en avant de la première brosse 58 et qui est destinée à être imprégnée de produit de nettoyage. La largeur transversale de l'éponge 84 est égale à celle des brosses 58, 60.

Plus particulièrement, le châssis 50 comporte deux bras longitudinaux 86 qui s'étendent globalement en saillie vers l'avant depuis un coin d'extrémité avant inférieur de chaque flasque 52. Une tige 88 transversale est montée entre les extrémités libres des deux bras 86. L'éponge 84 présente une forme tubulaire de manière qu'elle s'étende radialement autour de la tige 88.

Avantageusement la tige 88 est tubulaire, et elle présente des orifices radiaux (non représentés) de distribution qui sont répartis de manière homogène dans sa paroi cylindrique. Un tube d'alimentation (non représenté) est raccordé à une extrémité de la tige 88, tandis que l'autre extrémité de la tige 88 est bouchée. Ainsi, le produit de nettoyage injecté dans la tige 88 est absorbé par l'éponge 84 via les orifices de distribution.

Comme représenté à la figure 4, le châssis 50 est susceptible d'être porté par un chariot 90 mobile selon une direction longitudinale, comme indiqué par les flèches "F" des figures 6 et 7, pour permettre le passage d'arrière vers l'avant de la première brosse 58 au-dessus de la face supérieure concave 40 du creuset 42. Sur la figure 4, seules deux bras porteurs du chariot 90 ont été représentés. Le châssis 50 est ainsi suspendu aux bras porteurs du chariot 90.

Le chariot 90 est par exemple commandé par un opérateur qui règle la hauteur du dispositif 48 de nettoyage par rapport aux creusets 42, puis qui pousse vers l'avant le dispositif 48 de nettoyage longitudinalement vers l'avant pour effectuer l'opération de nettoyage.

Selon une variante non représentée de l'invention, le coulissement longitudinal du chariot 90 est commandé par un moteur.

Par ailleurs, le dispositif 48 est susceptible d'être mis en oeuvre selon un procédé qui va à présent être décrit.

Au début du procédé de nettoyage, le dispositif 48 de nettoyage est agencé en arrière des creusets 42, juste au-dessus du plan contenant la face supérieure concave 40 de chaque creuset 42.

Durant toute l'opération de nettoyage, les brosses 58, 60 sont entraînées en rotation rapide par le moteur 64.

Lors d'une première étape d'application du produit nettoyant, le dispositif 48 de nettoyage est mû vers l'avant de manière que l'éponge 84 frotte contre la face supérieure concave 40 et le bord 44 du creuset 42. Ce faisant, l'éponge 84 est comprimée, provoquant ainsi l'écoulement du produit de nettoyage imprégnant l'éponge 84 sur le creuset 42, et plus particulièrement sur la couche superficielle 46 de composé intermétallique.

Puis, lors d'une deuxième étape de nettoyage, le dispositif 48 de nettoyage est avancé encore selon une direction longitudinale de manière que la première brosse 58, puis la deuxième brosse 60, passent successivement au droit de la face supérieure concave 40 et du bord 44 du creuset 42. Le dispositif 48 de nettoyage est positionné à une hauteur telle que les filaments 62 des brosses 58, 60 qui dépassent sous les flasques 52 sont au contact de la face supérieure concave 40 du creuset 42. Au moins pendant cette opération, les brosses 58, 60 sont entraînées en rotation rapide par le moteur 64 de manière à nettoyer, sans effort pour l'opérateur, chaque creuset 42, c'est-à-dire la face supérieure concave 40, mais aussi une portion supérieure des parois latérales verticales de la colonne 34 associée.

Le capot 76 protège l'opérateur des projections de poussières tandis que l'aspirateur aspire ces poussières.

La largeur transversal des brosses 58, 60 et de l'éponge 84 est avantageusement adaptée au nettoyage de tous les creusets 42 en une seule passe longitudinale.

Grâce au dispositif 48 de nettoyage réalisé selon les enseignements de l'invention, l'opérateur chargé du nettoyage n'est pas exposé à la fumée, à la chaleur, aux flux chimiques ou à la poussière susceptibles d'intervenir durant le procédé de nettoyage. Ainsi, le nettoyage des creusets 42 est plus simple et moins dangereux pour l'opérateur.

De plus, le temps de nettoyage des creusets 42 est raccourci, ce qui permet de raccourcir le temps d'arrêt de l'installation 10 de brasage.

En outre, le procédé de nettoyage est standardisé, c'est-à-dire que la régularité du brossage motorisé et la quantité de produit de nettoyage permet d'obtenir une usure uniforme des creusets 42 au cours du temps.

## Revendications

1. Installation (10) de brasage de composants électroniques (12) sur une carte à circuit imprimé (14), comprenant au-moins un creuset (42) comportant une face supérieure horizontale concave (40) qui est destinée à contenir un métal d'apport en fusion (30) susceptible de former une couche superficielle (46) de composé intermétallique sur la surface (40, 44) du creuset (42), ladite installation comprenant un dispositif (48) de nettoyage d'au moins un creuset (42),
ledit dispositif (48) de nettoyage comportant au moins une première brosse métallique (58) pour éliminer la couche superficielle (46) de composé intermétallique lors d'une opération de brossage de la surface (40, 44) du creuset (42),
**caractérisé en ce que** la première brosse (58) est une brosse cylindrique qui est monté en rotation autour d'un axe transversal (A) dans un châssis (50), et **en ce que** la première brosse (58) est entraînée en rotation par un moteur (64) de manière à automatiser l'opération de brossage.

2. Installation (10) selon la revendication précédente, **caractérisé en ce que** le châssis (50) comporte un capot (76) supérieur.

3. Installation (10) selon la revendication précédente, **caractérisé en ce que** le dispositif (48) de nettoyage comporte un aspirateur qui est agencé à proximité de la première brosse (58) de manière à aspirer les poussières susceptibles d'être produites par l'opération de brossage.

4. Installation (10) selon l'une quelconque des revendications précédentes, **caractérisé en ce que** le châssis (50) est porté par un chariot (90) mobile selon une direction longitudinale pour permettre le passage d'arrière vers l'avant de la première brosse (58) au-dessus de la face concave (40) du creuset (42).

5. Installation (10) selon la revendication précédente, **caractérisé en ce que** le dispositif (48) de nettoyage comporte des moyens (84, 88) pour appliquer automatiquement un produit de nettoyage sur la surface (40, 44) du creuset (42) avant le passage de la première brosse (58).

6. Installation (10) selon la revendication précédente, **caractérisé en ce que** le dispositif (48) de nettoyage comporte une éponge (84) transversale qui est agencée longitudinalement en avant de la première brosse (58) et qui est destinée à être imprégnée du produit de nettoyage.

7. Installation (10) selon l'une quelconque des revendications précédentes, **caractérisé en ce que** le dispositif (48) de nettoyage comporte une deuxième brosse (60) arrière métallique cylindrique qui est montée à rotation parallèlement à la première brosse (58) avant et qui est entraînée en rotation par un moteur (64).

8. Installation (10) selon la revendication précédente, **caractérisé en ce que** la deuxième brosse (60) tourne dans un sens inverse au sens de rotation de la première brosse (58).

9. Installation (10) selon l'une quelconque des revendications 7 ou 8, **caractérisé en ce que** la première brosse (58) et la deuxième brosse (60) sont entraînées en rotation par un moteur commun (64).

10. Installation (10) selon l'une quelconque des revendications 4 à 9, **caractérisé en ce que** l'installation (10) de brasage comporte une pluralité de creusets (42) qui sont agencés sensiblement dans un même plan horizontal, et **en ce que** la première brosse (58) est d'une largeur adaptée au nettoyage de tous les creusets (42) en une seule passe.

## Claims

1. Installation (10) for soldering electronic components (12) onto a printed circuit board (14), comprising at least one crucible (42) having a concave horizontal upper face (40), which is intended to contain a molten filler metal (30) capable of forming a surface layer (46) of intermetallic compound on the surface (40, 44) of the crucible (42), the said installation comprising a device (48) for cleaning at least one crucible (42),
the said cleaning device (48) comprising at least one first metal brush (58) for removing the surface layer (46) of intermetallic compound during an operation of brushing the surface (40, 44) of the crucible (42), **characterized in that** the first brush (58) is a cylindrical brush which is mounted in rotation about a transverse axis (A) in a chassis (50), and **in that** the first brush (58) is driven in its rotation by a motor (64) so that the brushing operation is automated.

2. Installation (10) according to the preceding claim, **characterized in that** the chassis (50) has a top cover (76).

3. Installation (10) according to the preceding claim, **characterized in that** the cleaning device (48) comprises a suction extractor which is positioned near the first brush (58) so as to suck up any dust likely to be produced by the brushing operation.

4. Installation (10) according to any one of the preceding claims, **characterized in that** the chassis (50) is carried by a carriage (90) capable of moving in a longitudinal direction to allow the first brush (58) to move forwards over the concave face (40) of the crucible (42).

5. Installation (10) according to the preceding claim, **characterized in that** the cleaning device (48) comprises means (84, 88) for automatically applying a cleaning product to the surface (40, 44) of the crucible (42) before the first brush (58) passes over it.

6. Installation (10) according to the preceding claim, **characterized in that** the cleaning device (48) comprises a transverse sponge (84) arranged longitudinally ahead of the first brush (58) and intended to be impregnated with the cleaning product.

7. Installation (10) according to any one of the preceding claims, **characterized in that** the cleaning device (48) comprises a cylindrical metallic rear second brush (60) which is mounted to rotate parallel to the front first brush (58) and which is driven in its rotation by a motor (64).

8. Installation (10) according to the preceding claim, **characterized in that** the second brush (60) turns in the opposite direction to the direction in which the first brush (58) turns.

9. Installation (10) according to either one of claims 7 and 8, **characterized in that** the first brush (58) and the second brush (60) are driven in their rotation by a common motor (64).

10. Installation (10) according to any one of Claims 4 to 9, **characterized in that** the soldering installation (10) comprises a plurality of crucibles (42) which are arranged substantially in one and the same horizontal plane, and **in that** the first brush (58) is of a width suited to being able to clean all of the crucibles (42) in a single pass.

## Patentansprüche

1. Anlage (10) zum Löten elektronischer Komponenten (12) auf einer gedruckten Schaltungskarte (14), mit wenigstens einem Tiegel (42), der eine konkave horizontale obere Fläche (40) aufweist, die dazu bestimmt ist, ein Schmelzbeilagermetall (30) zu enthalten, das eine Oberflächenschicht (46) einer intermetallischen Verbindung auf der Oberfläche (40, 44) des Tiegels (42) bilden kann, wobei die Anlage eine Vorrichtung (48) zum Reinigen wenigstens eines Tiegels (42) enthält,
wobei die Reinigungsvorrichtung (48) wenigstens eine erste Metallbürste (58) aufweist, um die Oberflächenschicht (46) von der intermetallischen Verbindung zu entfernen, wenn die Oberfläche (40, 44) des Tiegels (42) gebürstet wird,
**dadurch gekennzeichnet, dass** die erste Bürste (58) eine zylindrische Bürste ist, die in einem Rahmen (50) drehbar um eine transversale Achse (A) montiert ist, und dass die erste Bürste (58) durch einen Motor (64) rotatorisch in der Weise angetrieben wird, dass der Bürstvorgang automatisch erfolgt.

2. Anlage (10) nach dem vorhergehenden Anspruch, **dadurch gekennzeichnet, dass** der Rahmen (50) eine obere Abdeckkappe (76) aufweist.

3. Anlage (10) nach dem vorhergehenden Anspruch, **dadurch gekennzeichnet, dass** die Reinigungsvorrichtung (48) eine Saugvorrichtung umfasst, die in der Nähe der ersten Bürste (58) angeordnet ist, um Stäube anzusaugen, die durch den Bürstvorgang erzeugt werden können.

4. Anlage (10) nach einem der vorhergehenden Ansprüche, **dadurch gekennzeichnet, dass** der Rahmen (50) durch einen Schlitten (90) unterstützt ist, der in einer Längsrichtung beweglich ist, um die Bewegung der ersten Bürste (58) von hinten nach vorn über die konkave Fläche (40) des Tiegels (42) zu ermöglichen.

5. Anlage (10) nach dem vorhergehenden Anspruch, **dadurch gekennzeichnet, dass** die Reinigungsvorrichtung (48) Mittel (84, 88) umfasst, um ein Reinigungsprodukt automatisch auf die Oberfläche (40, 44) des Tiegels (42) aufzubringen, bevor sich die erste Bürste (58) darüber bewegt.

6. Anlage (10) nach dem vorhergehenden Anspruch, **dadurch gekennzeichnet, dass** die Reinigungsvorrichtung (48) einen transversalen Schwamm (84) umfasst, der in Längsrichtung vor der ersten Bürste (58) angeordnet ist und dazu bestimmt ist, mit dem Reinigungsprodukt imprägniert zu werden.

7. Anlage (10) nach einem der vorhergehenden Ansprüche, **dadurch gekennzeichnet, dass** die Reinigungsvorrichtung (48) eine zylindrische, metallische, hintere zweite Bürste (60) umfasst, die parallel zu der vorderen ersten Bürste (58) drehbar montiert ist und durch einen Motor (64) rotatorisch angetrieben wird.

8. Anlage (10) nach dem vorhergehenden Anspruch, **dadurch gekennzeichnet, dass** sich die zweite Bürste (60) in einer Richtung dreht, die zu der Drehrichtung der ersten Bürste (58) entgegengesetzt ist.

9. Anlage (10) nach einem der Ansprüche 7 oder 8, **dadurch gekennzeichnet, dass** die erste Bürste (58) und die zweite Bürste (60) durch einen gemeinsamen Motor (64) rotatorisch angetrieben werden.

10. Anlage (10) nach einem der Ansprüche 4 bis 9, **dadurch gekennzeichnet, dass** die Lötanlage (10) mehrere Tiegel (42) umfasst, die im Wesentlichen in derselben horizontalen Ebene angeordnet sind, und dass die erste Bürste (58) eine Breite besitzt, die für die Reinigung sämtlicher Tiegel (42) in einem einzigen Durchgang geeignet ist.
